Europäisches Patentamt

European Patent Office

Office européen des brevets

(11) Numéro de publication: **0 295 985 B1**

(12) **FASCICULE DE BREVET EUROPEEN**

(45) Date de publication de fascicule du brevet: **26.08.92**  (51) Int. Cl.⁵: **G07C 9/00**, G07F 7/10

(21) Numéro de dépôt: **88401266.7**

(22) Date de dépôt: **25.05.88**

(54) **Système d'identification d'individus.**

(30) Priorité: **26.05.87 FR 8707380**

(43) Date de publication de la demande:
**21.12.88 Bulletin 88/51**

(45) Mention de la délivrance du brevet:
**26.08.92 Bulletin 92/35**

(84) Etats contractants désignés:
**AT BE CH DE ES FR GB IT LI LU NL SE**

(56) Documents cités:
EP-A- 0 056 686       EP-A- 0 089 087
EP-A- 0 131 421       EP-A- 0 217 654
WO-A-87/02491        DE-C- 3 233 843
FR-A- 2 571 419       US-A- 3 714 644
US-A- 3 806 874

(73) Titulaire: **COMPAGNIE GENERALE DES MATIE-
RES NUCLEAIRES (COGEMA)
2, rue Paul Dautier B.P. 4
F-78141 Vélizy-Villacoublay(FR)**

(72) Inventeur: **Hugelmann, Denis
33, rue des Ardennes
F-50100 Cherbourg(FR)**
Inventeur: **Ricaud, Jean-Louis
6, Place de L'Eglise d'Huisson Longeville
F-91590 La Ferté Allais(FR)**
Inventeur: **Roulland, Michel
4, Rue du Vermandois
F-50130 Octeville(FR)**

(74) Mandataire: **Mongrédien, André et al
c/o BREVATOME 25, rue de Ponthieu
F-75008 Paris(FR)**

## Description

L'invention concerne un système d'identification d'individus autorisés à accéder à une zone réservée ou se servir de terminaux d'ordinateur.

On se préoccupe de plus en plus de renforcer les systèmes de sécurité, notamment à l'entrée de certaines zones sensibles renfermant des produits dangereux ou, plus généralement, les points névralgiques d'entreprises ou d'organismes sociaux. Il est désormais nécessaire de prévoir la possibilité d'actes de terrorisme ou de sabotage profitant de la négligence de certains employés ou même de leur complicité.

Un moyen simple pour éviter la pénétration de personnes non autorisées dans ces zones consiste à attribuer des moyens d'identification ou simplement d'autorisation d'accès. Les badges sont couramment employés dans ce but. Il n'offrent cependant pas une grande sécurité et ne sont applicables que dans le cas où les accès sont surveillés par des gardiens, sans mise en oeuvre d'un système automatique.

Des moyens plus perfectionnés ont été proposés.

La société Zettler a ainsi commercialisé un badge équipé d'un émetteur-récepteur. Quand le porteur arrive à la zone réservée, il pénètre dans un champ magnétique qui transmet de l'énergie au badge et lui fait émettre un signal codé permettant d'identifier le porteur. Il est évident que le badge peut être volé ou échangé sans que le système s'en aperçoive, et il est même possible d'enregistrer le signal émis pour ensuite le reproduire par tout autre moyen. La sécurité offerte est donc loin d'être absolue, et pas supérieure à celle accordée par un badge ordinaire.

Dans un domaine voisin, un système de surveillance de détenus à domicile est proposé par la société Contrac aux Etats-Unis. Le détenu porte un bracelet équipé d'un émetteur à piles d'un signal périodique que capte un appareil récepteur disposé dans le même appartement et qui est relié au commissariat. Si le détenu s'éloigne d'une soixantaine de mètres, l'appareil récepteur ne reçoit plus le signal et donne l'alarme.

On a bien sûr pensé au cas où le détenu ôterait le bracelet, le poserait près du récepteur et s'éloignerait. Le fermoir du bracelet est donc équipé d'un témoin anti-fraude qui est contrôlé de temps en temps, mais qui ne joue finalement qu'un role dissuasif car l'infraction ne peut être constatée qu'après coup. Dans ce système également, le moyen de contrôle est indépendant du porteur et ne peut donc fournir une identification certaine.

Un système d'identification d'individus tel que décrit dans le préambule de la revendication indépendante est connu du document US-A-3 806 874.

L'invention concerne un système plus perfectionné qui vise à rendre les fraudes pratiquement impossibles. Il comporte également un bracelet à microprocesseur qui est fixé aux personnes autorisées et que l'on programme au moment de la pose, de manière à lui faire émettre un signal d'identification de la personne. Le microprocesseur est déprogrammé dès que le bracelet est ouvert. Le signal émis par le bracelet dépend d'un signal d'interrogation aléatoire, si bien qu'il est inutile de chercher à l'enregistrer. De plus, le poids de la personne est éventuellement mesuré et vérifié à l'entrée de façon à détecter le passage éventuel d'une autre personne l'accompagnant.

L'invention peut encore être avantageusement employée pour autoriser ou interdire le service sur des terminaux d'ordinateur, notamment lors de la demande d'accès à l'ordinateur et éventuellement de manière périodique. Le risque de saisie d'informations confidentielles est ainsi empêché ou limité.

Plus précisément, l'invention concerne un système d'identification d'individus comprenant :

- pour chaque individu, un bracelet portant un boîtier contenant un microprocesseur à mémoire qui fonctionne en codant des informations en fonction d'un algorithme, un émetteur-récepteur des signaux correspondant à des informations à coder vers le microprocesseur et des signaux correspondant à des informations codées hors de celui-ci, et un moyen de transmission de signaux qui fait le tour du bracelet de façon à interrompre le fonctionnement du microprocesseur par suite d'une ouverture du bracelet ;

- un ordinateur comprenant un générateur de signaux correspondant à des informations aléatoires, l'algorithme, une unité de décodage des signaux correspondant aux informations codées par les microprocesseurs et une unité de décision identifiant les individus avec les signaux décodés ;

- au moins un appareillage émetteur-récepteur qui transmet un signal, correspondant à une information aléatoire provenant du générateur au boîtier porté par le bracelet attaché à l'individu, et transmet à l'ordinateur le signal correspondant à l'information codée par le microprocesseur ;
  caractérisé en ce que le moyen de transmission de signaux est une fibre optique qui aboutit à ses deux extrémités face à un photo-émetteur relié à une source d'énergie électrique et à un récepteur photosensible relié au microprocesseur, le photo-émetteur et le récepteur photosensible étant situés dans le boîtier ;

- un poste d'attribution des bracelets aux individus, comprenant un groupe d'appareils communiquant avec l'ordinateur en lui transmettant des ordres d'association d'un individu et d'un bracelet qui lui est attaché, et en recevant de l'ordinateur, pour ensuite les transmettre au boîtier, un signal régénérant le fonctionnement du microprocesseur et y inscrivant en mémoire l'algorithme.

De manière particulièrement avantageuse, l'algorithme se compose d'un code distinctif associé à chaque individu ainsi que d'un code renouvelé périodiquement.

On va maintenant décrire l'invention à l'aide des figures suivantes, données en annexe à titre illustratif et nullement limitatif :

- la figure 1 représente essentiellement la partie du système portée par l'individu à l'aide du bracelet ;
- la figure 2 représente de manière schématique l'ensemble des composants de l'invention dans le cas où le bracelet est utilisé pour l'accès à une zone réservée ; et
- la figure 3 représente de manière schématique l'ensemble des composants de l'invention dans le cas où le bracelet est utilisé pour autoriser le service d'un terminal d'ordinateur.

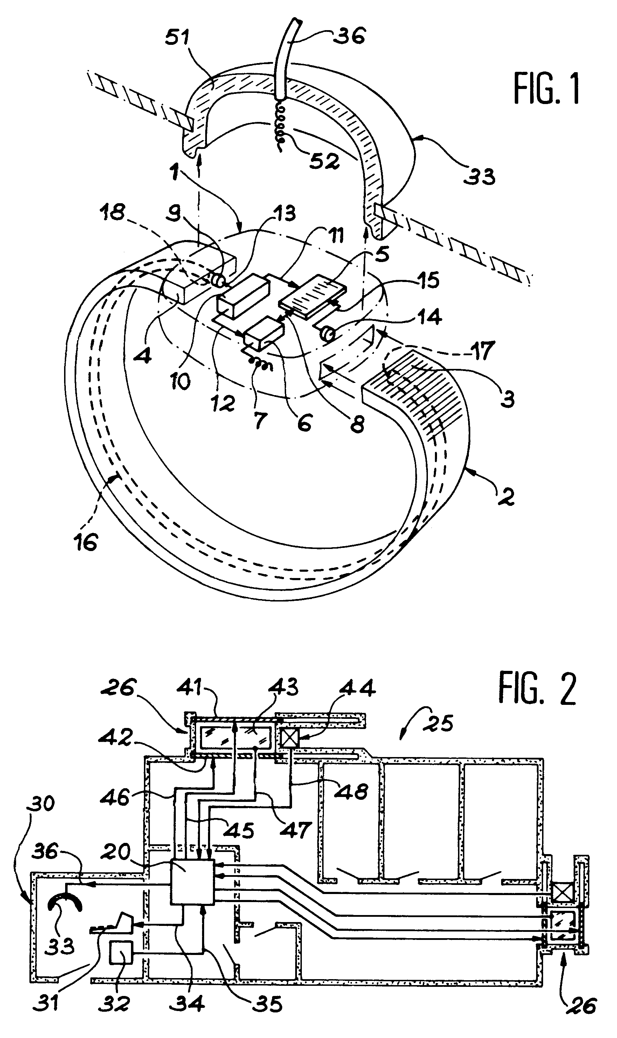

La figure 1 représente un boîtier 1 porté au poignet de la personne autorisée à l'aide d'un bracelet 2 que l'on peut ouvrir en dégageant un raccord à cliquet 3 d'une paroi latérale du boîtier 1, un autre raccord 4 du bracelet 2 restant solidaire du boîtier 1. Le cliquet 3 est conçu pour ne pas pouvoir s'ouvrir en cas de glissement sur le poignet lors d'un travail manuel par exemple.

Le boîtier 1 contient un microprocesseur 5 contenant une mémoire, un émetteur-récepteur 6 relié au microprocesseur par une connexion 8 et à une antenne 7 insérée dans la paroi du boîtier 1, un photo-émetteur 9, une petite pile au lithium 10 qui alimente le microprocesseur 5, l'émetteur-récepteur 6 et le photo-émetteur 9 par trois connexions 11, 12 et 13 respectivement, et il contient enfin un récepteur photosensible 14 relié au microprocesseur 5 par une connexion 15.

Le bracelet 2 renferme quant à lui une fibre optique 16 qui en fait le tour. Une de ses extrémités 18 est raccordée au photo-émetteur 9 ; l'autre, référencée 17, débouche du raccord à cliquet 3 en face du récepteur photosensible 14. Quand le raccord à cliquet 3 pénètre dans le boîtier 1 et que le bracelet 2 est donc fermé, la lumière est ainsi transmise par pulsations du photo-émetteur 9 au récepteur photosensible 14 par la fibre optique 16. Cette transmission est interrompue quand le bracelet 2 est ouvert.

Le système bracelet est utilisé en liaison avec d'autres composants qui sont représentés figure 2. La personne qui veut entrer dans la zone réservée 25 doit passer par des sas 26 composés de deux portes verrouillables, une externe 41 et une interne 42 dont le verrouillage et le déverrouillage sont commandés par un ordinateur 20 à l'aide de connexions 45 et 46 respectivement. De façon plausible, l'ordinateur 20 est placé dans la zone réservée 25.

Les sas 26 comprennent chacun une balance de vérification 43 et un émetteur-récepteur de sas 44 disposés entre les deux portes 41 et 42 et reliés à l'ordinateur 20 par des connexions respectives 47 et 48.

Enfin, il existe un poste de gardiennage 30 à l'extérieur de la zone réservée 25, dans lequel on attribue les bracelets 2 à microprocesseur 5 et qui possède un terminal à clavier 31, une balance 32 et un émetteur 33 reliés eux aussi à l'ordinateur 20 par des connexions respectives référencées 34, 35, 36.

L'émetteur 33 est représenté figure 1. Il comprend une ventouse 51 au fond de laquelle une micro-antenne 52 transmet les instructions de l'ordinateur 20 ; sa portée d'émission ne dépasse pas quelques centimètres.

Le fonctionnement du système va maintenant être décrit.

La personne autorisée qui désire accéder à la zone réservée 25 se présente au poste de gardiennage 30. Elle est identifiée visuellement par le gardien qui lui remet un bracelet à microprocesseur qu'elle fixe au poignet. Le gardien annonce à l'ordinateur 20 le nom de la personne à l'aide du terminal à clavier 31 et lui propose de passer sur la balance 32. L'ordinateur 20, après avoir noté le nom de la personne et son poids, accepte de programmer le microprocesseur 5.

Pour cela, le boîtier 1 est approché de l'embouchure de la ventouse 51, et l'ordinateur 20 transmet à la mémoire du microprocesseur 5, au moyen de l'émetteur-récepteur 6, deux signaux qui correspondent à des clefs de codage dont l'une, notée C'est invariable et caractérise la personne, alors que l'autre, notée K, est commune à toutes les personnes autorisées mais est renouvelée périodiquement.

La personne peut alors entamer les formalités d'accès. Elle ouvre une porte externe 41 et pénètre dans le sas 26 correspondant. Pendant ce temps, l'ordinateur 20 effectue ou maintient le verrouillage de la porte interne 42, et verrouille également la porte externe 41 dès qu'elle est refermée.

L'ordinateur interroge le microprocesseur 5 en lui transmettant, au moyen de l'émetteur-récepteur de sas 44, un signal correspondant à un nombre aléatoire X tiré d'un générateur de nombres aléatoires. Le microprocesseur 5 identifie ce nombre X et le code suivant un algorithme f qui dépend des codes C et K, si bien que le résultat du codage est un nombre X' qui peut être noté X' = f(C,K,X). Le microprocesseur 5 transmet un signal correspondant au nombre codé X' à l'ordinateur 20 par l'intermédiaire des émetteurs-récepteurs 6 et 44, après quoi X' est recherché dans la liste de nombres $X'_i = f(C_i,K,X)$ où $C_i$ désigne le code caractéristique d'une personne autorisée quelconque. Comme l'algorithme f correspond à une fonction injective, les nombres $X'_i$ sont tous différents et il est possible à l'ordinateur 20 de retrouver le code $C_i$ caractéristique de la personne et ainsi de l'identifier. Son heure d'entrée dans la zone réservée 25 peut apparaître sur un journal de présence. Mais avant de déverrouiller la porte interne 42, l'ordinateur 20 vérifie que le poids de la personne, mesuré par la balance de sas 43, coïncide bien avec celui que la balance 32 du poste du gardiennage 30 lui avait transmis.

La sortie de la zone réservée 25 peut s'effectuer par le même processus. La personne peut alors ouvrir son bracelet 2 pour le restituer.

Le récepteur photosensible 14 cesse d'être impressionné à l'aide de la fibre optique 16, et il émet une instruction qui déprogramme le microprocesseur 5 et le rend inapte à remplir sa mission. Le bracelet 2 ramené au poste de gardiennage 30 pourra être ultérieurement reprogrammé avec un porteur différent.

Tous les cas de fraude que l'on peut envisager de façon réaliste sont parés avec un tel système.

Tout d'abord, le bracelet ne peut être prêté à un autre porteur, même de poids identique, car son ouverture déprogramme le microprocesseur 5. L'enregistrement du signal de programmation, qui nécessiterait d'ailleurs la complicité du porteur légitime, est impossible car l'émission de la microantenne 52 est limitée à l'intérieur de la ventouse 51 et à son embouchure.

Il est par contre possible de capter les signaux échangés à l'intérieur du sas 26 ou de reproduire à l'extérieur les signaux correspondant à des nombres aléatoires X et de capter les signaux correspondant à des nombres codés X'. On pourrait imaginer qu'en disposant de suffisamment de nombres codés X' en réponse à autant de nombres aléatoires X, il soit possible de déduire l'algorithme f de codage et ainsi de reproduire le microprocesseur 5. Il n'en est rien à cause du code K qui est renouvelé, par exemple, chaque jour : le temps est trop court pour percer le secret de l'algorithme modifié par le code K.

La seule fraude encore envisageable consiste à pénétrer dans le sas en même temps qu'un porteur de bracelet, mais elle est détectée par la balance de sas 43 qui peut d'ailleurs également empêcher d'introduire ou de détourner du matériel en cachette.

Le choix d'une fibre optique s'explique par l'impossibilité actuelle d'y raccorder une dérivation et de couper la fibre entre les raccordements sans détruire la transmission lumineuse, ce qui aurait été possible avec un circuit électrique et aurait pu permettre une ouverture illégale du bracelet 2. La fibre optique présente donc ici un grand avantage sur des circuits considérés comme équivalents pour d'autres applications.

De plus, la lumière transmise est pulsée à une fréquence donnée, ce qui diminue les possibilités de dérivation et permet également une économie d'énergie.

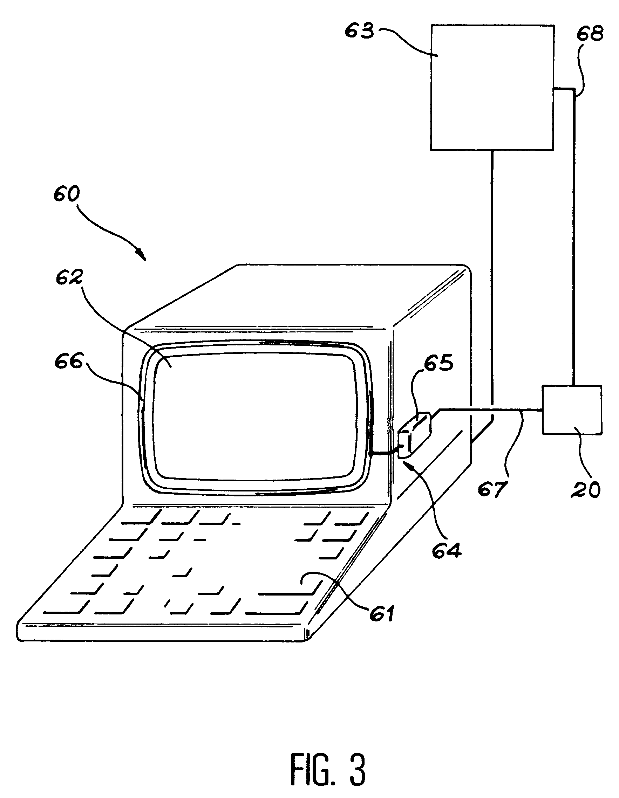

Une autre utilisation possible du système d'identification est représentée figure 3. Le porteur du bracelet 2, après être passé par le poste de gardiennage 30 est autorisé à se servir d'un terminal 60 comprenant par exemple un clavier 61 et un écran 62, de système informatique 63. Un émetteur-récepteur 64, analogue à celui référencé 44 dans l'application précédente est intégré au terminal 60.

Il comprend un boîtier de conversion 65 de signaux électriques relié à une antenne 66 qui peut par exemple être disposée en boucle autour de l'écran 62, derrière la paroi de cerclage. Une ligne électrique 67 relie le boîtier de conversion 65 à l'ordinateur 20.

Quand le porteur du bracelet 2 s'assoit devant le terminal 60 et presse les touches du clavier 61 pour demander à se servir du terminal 60, en donnant son mot de passe, l'ordinateur d'identification 20, qui appartient au système informatique 63 ou est relié à lui par une interconnexion 68, détecte la présence d'un utilisateur et interroge le bracelet 2 à l'aide de l'émetteur-récepteur 64 et selon les modalités décrites précédemment. Si l'identification est positive, le terminal 60 peut être mis en service, sinon il reste inerte. On peut avantageusement prévoir que l'ordinateur d'identification 20 renouvelle périodiquement ses interrogations et puisse commander l'interruption du service du terminal 60 s'il détecte que l'utilisateur a changé. L'utilisateur légitime n'a aucune formalité particulière à accomplir et ne s'aperçoit d'ailleurs pas des interrogations.

La protection est encore plus complète pour des terminaux 60 placés dans la zone réservée 25, car on est alors assuré qu'aucun spectateur non autorisé ne peut saisir des informations confidentielles apparaissant sur l'écran. Si on ne veut absolument aucun spectateur, le terminal 60 peut être placé dans une cellule hermétique analogue aux sas 26 de l'application précédente, dont le plancher est muni d'une balance et qui compare le poids du contenu de la cellule avec celui du porteur du bracelet 2.

## Revendications

1. Système d'identification d'individus comprenant :

- pour chaque individu, un bracelet (2) portant un boîtier (1) contenant un microprocesseur (5) à mémoire qui fonctionne en codant des informations en fonction d'un algorithme, un émetteur-récepteur (6) des signaux correspondant à des informations à coder vers le microprocesseur (5) et des signaux correspondant à des informations codées hors de celui-ci, et un moyen de transmission de signaux qui fait le tour du bracelet de façon à interrompre le fonctionnement du microprocesseur par suite d'une ouverture du bracelet (2) ;

- un ordinateur (20) comprenant un générateur de signaux correspondant à des informations aléatoires (X), l'algorithme, une unité de décodage des signaux (X') correspondant aux informations codées par les microprocesseurs (5) et une unité de décision identifiant les individus avec les signaux décodés ;

- au moins un appareillage émetteur-récepteur (44) qui transmet un signal, correspondant à une information aléatoire provenant du générateur au boîtier (1) porté par le bracelet (2) attaché à l'individu, et transmet à l'ordinateur (20) le signal (X') correspondant à l'information codée par le microprocesseur (5) ; caractérisé en ce que le moyen de transmission de signaux est une fibre optique (16) qui aboutit à ses deux extrémités face à un photo-émetteur (9) relié à une source d'énergie électrique (10) et à un récepteur photosensible (14) relié au microprocesseur (5), le photo-émetteur (9) et le récepteur photosensible (14) étant situés dans le boîtier (9) ;

- un poste d'attribution (30) des bracelets aux individus, comprenant un groupe d'appareils (31, 33) communiquant avec l'ordinateur (20) en lui transmettant des ordres d'association d'un individu et d'un bracelet qui lui est attaché, et en recevant de l'ordinateur (20), pour ensuite les transmettre au boîtier (1), un signal régénérant le fonctionnement du microprocesseur (5) et y inscrivant en mémoire l'algorithme.

2. Système d'identification d'individus selon la revendication 1, caractérisé en ce que le signal régénérant le fonctionnement du microprocesseur (5) et y inscrivant en mémoire l'algorithme est transmis à l'ensemble portatif à l'aide d'une ligne électrique (36) terminée par une antenne (52) émettant à une distance limitée à quelques centimètres.

3. Système d'identification d'individus selon l'une quelconque des revendications 1 ou 2, caractérisé en ce que l'algorithme se compose d'un code distinctif $(C_i)$ associé à chaque individu ainsi que d'un code (K) renouvelé périodiquement.

4. Système d'identification d'individus selon l'une quelconque des revendications 1 à 3, caractérisé en ce qu'il est utilisé pour l'accès à une zone réservée, le poste d'attribution des bracelets étant hors de cette zone réservée, les appareillages émetteurs-récepteurs étant placés près de sas (26) qui commandent l'accès à la zone réservée, transmettant les signaux quand l'individu est enfermé dans le sas et autorisant l'accès à la zone réservée (25) quand l'identification a été effectuée.

5. Système d'identification d'individus selon la revendication 4, caractérisé en ce que chaque sas, ainsi que le poste d'attribution (30), est muni d'une balance (32, 43), le poids du contenu du sas (26) au moment de l'identification de l'individu dans le sas étant comparé avec le poids de l'individu quand le bracelet (2) a été associé à l'individu dans le poste d'attribution (30).

6. Système d'identification d'individus selon l'une quelconque des revendications 1 à 3, caractérisé en ce qu'il est utilisé pour autoriser le service sur des terminaux d'un système informatique comprenant l'ordinateur (20), un appareillage émetteur-récepteur (64) étant intégré à chaque terminal, les terminaux en service communiquant avec l'ordinateur qui interroge le bracelet (2) de l'individu effectuant le service sur le terminal.

**Claims**

1. System for the identification of individuals, comprising:

- for each individual, a wristband (2) carrying a module (1) containing a microprocessor (5) incorporating a memory, which microprocessor operates by encoding information as a function of an algorithm, an emitter-receiver (6) of the signals corresponding to information to be encoded to the microprocessor (5) and of the signals corresponding to encoded information from the microprocessor, and a means for the transmission of signals which passes around the wristband in such a manner as to interrupt the operation of the microprocessor in consequence of an opening of the wristband (2);

- a computer (20) comprising a generator of signals corresponding to random information (X), the algorithm, a unit for the decoding of the signals (X') corresponding to the information encoded by the microprocessors (5) and a decision unit identifying the individuals with the decoded signals;

- at least one emitter-receiver apparatus (44) which transmits a signal, corresponding to random information originating from the generator, to the module (1) carried by the wristband (2) attached to the individual, and transmits to the computer (20) the signal (X') corresponding to the information encoded by the microprocessor (5);

  characterised in that the means for the transmission of signals is an optical fibre (16) which terminates, at its two ends, opposite a photoemitter (9) connected to an electrical power source (10) and a photosensitive receiver (14) connected to the microprocessor (5), the photoemitter (9) and the photosensitive receiver (14) being situated within the module (1);

- a station (30) for the allocation of the wristbands to the individuals comprising a set of apparatuses (31, 33) communicating with the computer (20) by transmitting to it commands for the association of an individual and of a wristband which is attached to him, and by receiving from the computer (20), in order then to transmit them to the module (1), a signal regenerating the operation of the microprocessor (5) and inscribing the algorithm in memory therein.

2. System for the identification of individuals according to Claim 1, characterised in that the signal regenerating the operation of the microprocessor (5) and inscribing the algorithm in memory therein is transmitted to the portable assembly by means of an electrical line (36) terminated by an antenna (52) emitting to a distance limited to a few centimetres.

3. System for the identification of individuals according to either one of Claims 1 or 2, characterised in that the algorithm is composed of a distinctive code ($C_i$) associated with each individual as well as of a code (K) which is periodically renewed.

4. System for the identification of individuals according to any one of Claims 1 to 3, characterised in that it is employed for access to a restricted zone, the station for the allocation of the wristbands being outside this restricted zone, the emitter-receiver apparatuses being placed close to chambers (26) which command access to the restricted zone, transmitting the signals when the individual is held in the chamber and authorizing access to the restricted zone (25) when the identification has been effected.

5. System for the identification of individuals according to Claim 4, characterised in that each chamber, as well as the allocation station (30), is equipped with a balance (32, 43), the weight of the contents of the chamber (26) at the time of the identification of the individual in the chamber being compared with the weight of the individual when the wristband (2) was associated with the individual in the allocation station (30).

6. System for the identification of individuals according to any one of Claims 1 to 3, characterised in that it is employed to authorize service on terminals of a data processing system comprising the computer (20), an emitter-receiver apparatus (64) being integrated in each terminal, the terminals in service communicating with the computer which interrogates the wristband (2) of the individual effecting service on the terminal.

**Patentansprüche**

1. System zur Identifizierung von Personen mit:
   - für jede Person einem Ring (2), der einen Behälter (1) trägt, der einen Mikroprozessor (5) mit Speicher, der so funktioniert, daß er Informationen als Funktion eines Algorithmus codiert, einen Sende-Empfänger (6) für diesen Informationen entsprechende Signale zum Codieren für den Mikroprozessor (5) und für codierten Informationen entsprechende Signale von demselben und eine Signalübertragungsvorrichtung enthält, die den Ring derart umgibt, daß sie den Betrieb infolge einer Öffnung des Rings (2) unterbricht;
   - einem Computer (20), der einen Generator zum Erzeugen von Signalen, die Zufallsinformationen (X) entsprechen, den Algorithmus, eine Decodiereinheit (X') für die den von den Mikroprozessoren (5) codierten Informationen entsprechenden Signale und eine Entscheidungseinheit umfaßt, die die Personen mit den decodierten Signalen identifiziert;

- wenigstens einer Sender-Empfängerapparatur (44), die ein Signal überträgt, das einer Zufallsinformation aus dem Generator in dem Behälter (1), der von Ring (2) getragen wird, der an der Person befestigt ist, und die an den Computer (20) das Signal (X') überträgt, das der von dem Mikroprozessor codierten Information (5) entspricht;

dadurch gekennzeichnet, daß die Übertragungsvorrichtung für Signale eine optische Faser (16) ist, die mit ihren beiden Enden gegenüber einem Photoemitter (9), der mit einer elektrischen Energiequelle (10) verbunden ist, und einem lichtempfindlichen Empfänger (14) endet, der mit dem Mikroprozessor (5) verbunden ist, wobei sich der Photoemitter (9) und der lichtempfindliche Empfänger (14) in dem Behälter (1) befinden;

- wobei das System umfaßt: einen Zuteilungsposten (30) für die Ringe an die Personen, der eine Gruppe von Apparaten (31, 33) umfaßt, die mit dem Computer (20) in Verbindung stehen, indem sie ihm die Zuweisungsordnungen einer Person und eines an ihr befestigten Ringes übertragen und von dem Computer (20) zur weiteren Übertragung an den Behälter (1) ein Signal erhalten, das die Funktion des Mikroprozessors (5) wiederherstellt und dort in den Speicher den Algorithmus einschreibt.

2. System zur Identifizierung von Personen nach Anspruch 1, dadurch gekennzeichnet, daß das Signal, das die Funktion des Mikroprozessors (5) wiederherstellt und dort in den Speicher den Algorithmus einschreibt, zur tragbaren Anordnung mit Hilfe einer elektrischen Leitung (36) übertragen wird, die von einer Antenne (52) abgeschlossen wird, die auf einen auf einige Zentimeter begrenzten Abstand sendet.

3. System zur Identifizierung von Personen nach einem der Ansprüche 1 oder 2, dadurch gekennzeichnet, daß der Algorithmus aus einem bestimmten, mit jeder Person verbundenen Code ($C_i$) und einem periodisch erneuerten Code (K) besteht.

4. System zur Identifizierung von Personen nach einem der Ansprüche 1 bis 3, dadurch gekennzeichnet, daß es für den Zugang in einen abgrenzten Bereich verwendet wird, wobei sich die Ringe außerhalb dieses abgegrenzten Bereichs befinden, wobei die Sende-Empfängerapparaturen in der Nähe von Schleusen (26) angeordnet sind, die den Zugang in den abgrenzten Bereich steuern, und die Signale aussenden, wenn die Person in der Schleuse eingeschlossen ist, und den Zugang in den abgrenzten Bereich (25) freigeben, wenn die Identifikation durchgeführt wurde.

5. System zur Identifizierung von Personen nach Anspruch 4, dadurch gekennzeichnet, daß jede Schleuse ebenso wie jeder Zuteilungsposten (30) mit einer Waage (32, 43) versehen ist, wobei das Gewicht des Schleuseninhalts (26) im Moment der Identifizierung der Person in der Schleuse mit dem Gewicht der Person verglichen wird, wenn der Ring (2) mit der Person im Zuteilungsposten (30) in Verbindung gebracht wurde.

6. System zur Identifizierung von Personen nach einem der Ansprüche 1 oder 3, dadurch gekennzeichnet, daß es verwendet wird, um den Service für Anschlußstationen eines Informatiksystems mit einem Computer (20) zu gestatten, wobei ein Sender-Empfänger (64) in jede Anschlußstation integriert ist, wobei die im Service befindlichen Anschlußstationen mit dem Computer in Verbindung stehen, der die Ringe (2) der den Service an der Anschlußstation durchführenden Person abfragt.

FIG. 1

FIG. 2

FIG. 3